# EUROPEAN PATENT APPLICATION

(11) **EP 4 571 909 A1**
(43) Date of publication of application: **18.06.2025**
(21) Application number: 23216877.3
(22) Date of filing: 14.12.2023
(51) Int. Cl.: H01M 10/04, H01M 50/46, H01M 50/536, H01M 50/538, H01M 50/54

(54) **METHOD OF PRODUCING AN ENERGY STORAGE DEVICE**

(71) Applicant: Customcells Holding GmbH, 25524 Itzehoe (DE)
(72) Inventor: Paulus, Alexander, Itzehoe (DE); Himstedt, Rasmus, Itzehoe (DE)
(74) Representative: LKGLOBAL Lorenz & Kopf Patentanwalt Attorney at Law PartG mbB

(57) **Abstract**

The present disclosure relates to a method for producing an energy storage device (1). In order to attain an energy storage device (1) with improved cooling and an easy, automatable and scalable way to produce such an energy storage device (1) a method for producing such an energy storage device (1) is required. For this reason, a method for producing an energy storage device (1) is disclosed, the method comprising: providing an electrode stack (2) comprising at least two electrodes (3) having each a tab (4), wherein a separator (5) is arranged between the electrodes (3), compressing the electrode stack (2), and heating the electrode stack (2) while the electrode stack (2) is in a compressed state.

## Description

### FIELD OF THE DISCLOSURE

The present disclosure relates to a method of producing an energy storage device.

### BACKGROUND

Energy storage devices, in particular batteries play a critical role in modern society, powering a wide range of devices from portable electronics to electric vehicles. Rechargeable batteries, also referred to as secondary batteries, are often preferred due to their reusability. Furthermore, the shift towards renewable energy sources such as solar and wind power has increased the need for energy storage systems, making batteries an essential technology in the transition to a low-carbon economy.

A battery cell comprises at least two electrodes and a separator that separates the electrodes from each other. Battery electrodes are conductive components that serve as the positive and negative terminals in a battery. Between the two electrodes is an ion-conducting electrolyte which ensures a high ion flow between the electrodes. Secondary batteries are based on the principle of moving metal ions as charge carriers from a cathode to an anode and vice versa. Typically, an electrode comprises a current collector and a tab.

An electrode stack in a battery consists of layers of cathode and anode materials separated by a separator. One unit of an electrode stack may comprise, stacked upon one another: a first separator, an anode, a second separator and cathode. Different orders and arrangements are also possible. Typically, within an electrode stack, multiple such units are stacked upon one another.

Due to the broad range of application, batteries with electrode stacks are subject to different requirements, such as a compact design, energy capacity, cooling, and size. In particular, the heat management of electrode stacks poses challenges and improvements are desirable. If this heat is not dissipated well or, in the worst case, even accumulates in certain areas (i.e. hot spots), degradation effects of the battery cell may occur that lead to accelerated aging of the cell.

Accordingly, an improvement may be to establish new cell designs with increased area available for cooling within each cell. In particular, the current collector of a cell may be used for cooling. However, such a cell designs is difficult to produce, in particular to produce in high volume.

In CN218182246U is disclosed an electrode assembly, wherein a first electrode, a second electrode, and a separation membrane sandwiched therebetween are wound around a winding axis to define a core and an outer peripheral surface. The first electrode includes, in the winding direction, a first active material portion coated with an active material layer and a first uncoated portion not coated with the active material layer. At least a portion of the first uncoated portion is defined as an electrode tab by itself. The first uncoated portion may include a first portion adjacent to a core portion of the electrode assembly, a second portion adjacent to an outer peripheral surface of the electrode assembly, and a third portion between the first portion and the second portion. The first portion or the second portion has a lower height than the third portion in the winding axis direction.

US7700222B2 discloses a sealed rechargeable battery that has an electrode group formed by winding together a positive electrode and a negative electrode via a separator. A plurality of radial slits are provided in a welding section that is formed by an exposed section of a collector of at least one of the positive electrode and the negative electrode exposed at both ends of the electrode group. In the welding section, the exposed section is folded from the winding axis side toward the outer periphery to form a flat welding face.

In CN212136613U is disclosed a hot-pressing system for a lithium battery pole group. The system comprises a heating space which is used for accommodating the pole group and heating the pole group; and the pressure applying device is used for applying pressure to the pole group when the pole group is heated. Therefore, a certain pressure is applied to the pole group by the pressure applying device while the pole group is heated in the heating space, so that the diaphragm of the pole group can be bonded with the pole piece immediately after being softened, and the temperature difference and the pole group state change caused by the interval of the pole group during the transfer between the preheating process and the hot pressing process of the pole group are reduced; therefore, the pole piece and the diaphragm have a good adhesion effect, poor adhesion between the pole piece and the diaphragm and staggered layer of the pole set generated in the hot-pressing process of the pole set are avoided, and the production efficiency is improved while the hot-pressing quality of the pole set is improved.

However, even if battery cells or other types of energy storage devices with improved designs remain desirable, a further challenge lies in developing a suitable production method for such energy storage devices.

### SUMMARY OF THE DISCLOSURE

Currently, it remains desirable to overcome the aforementioned problems and in particular to provide a method for producing an energy storage device with a compact design and improved cooling properties. More in particular, in order to attain an energy storage device with improved cooling and an easy, automatable and scalable way to produce such improved battery cells, a method for producing such an energy storage device is required.

Therefore, the present disclosure relates to a method for producing an energy storage device, the method comprising:
providing an electrode stack comprising at least two electrodes having each a tab, wherein a separator is arranged between the electrodes,
compressing the electrode stack, and
heating the electrode stack while the electrode stack is in a compressed state.

By providing such a method, an energy storage device can be produced with a compact design due to pressing and maintaining the stack in the compressed state thanks to the applied heat, as described in more detail below. Furthermore, the produced energy storage device can have an increased heat dissipation surface, especially in view of its compact design, as also described in more detail below.

An energy storage device may be a battery (or battery cell) comprising one or more battery cells units, in particular multiple battery cells units within an electrode stack.

A battery cell unit may consist of two electrodes, e.g. a positive electrode and a negative electrode, separated by a separator. A positive electrode, or cathode, is usually a foil or sheet component having a negative potential. In conventional lithium-ion battery cells, the positive electrode may consist of a 10 - 25 µm thick aluminum foil as current collector, an active material like for example Lithium-Nickel-Manganese-Cobalt-Oxide (NMC), and additives. A negative electrode, or anode, is usually a foil or sheet component having a negative potential. The negative electrode may consist of an 4 - 18 µm thick copper foil, which is coated with an active material like for example graphite and additives.

Typically, an electrode may feature a current collector and a tab. A current collector is usually an electrically conductive metallic foil or sheet. Its primary function is to provide a path for electrons to travel from an external electrical circuit to the electrochemically active portion of the battery. Typically, every current collector will comprise a tab. A tab is usually a foil part of the current collector foil protruding from the electrochemically active part of the current collector. A tab may be used to establish an electrically conductive contact between the current collector and the aforementioned external electrical circuit. The contact is usually established with an electrically conductive, metallic contact lead connected to the external electrical circuit. Current collector and tab may be one piece.

For lithium-ion batteries, various current collectors can be used such as Al, Cu, Ni, Ti, and/or stainless steel. Al can be used for a cathode current collector. Cu can be used as an anode current collector. Al and Cu current collectors can further be categorized into foil, meshed, foam and carbon coated type current collectors. All possible kinds of tabs are addressed by this disclosure.

A tab can be uncoated or coated, as an electrode might be coated for example for protection, such as, e.g. for chemical, mechanical, or electrical protection. A tab can be configured to obtain energy from the battery cell, charge the battery cell and/or for diagnostic purposes.

Every tab should be formed such that a tab of one electrode type (cathode or anode) does not contact an electrode of an opposite electrode type (anode or cathode) or its respective tab. Otherwise a shortcut could occur that could lead to a thermal runway, i.e. a defect, of the battery cell. To support this arrangement, electrodes can be arranged in a staggered way, such that on one side only electrodes of a certain type protrude, and the electrodes of the other type protrude on the other side. In general, tabs can be formed by bending, angling, and/or plating but also by other methods such as, e.g., casting or additive manufacturing.

A battery cell can have one of different forms. In particular, a battery cell can be a cylindrical cell, a prismatic cell, or a pouch cell. A cylindrical cell can have a tubular or cylindrical shape. A prismatic cell can have a flat, rectangular shape. A pouch cell can have a flexible, flat, and pouch-like structure. A battery can in particular comprise an electrode stack.

An electrode stack may consist of multiple individual battery cell units connected in series or parallel and enclosed in a housing. In the present disclosure and for the sake of brevity, many of the aspects, embodiments and further examples are described in the context of a prismatic battery cell. However, the content of the present disclosure may generally be applicable to other cell forms.

An electrode stack in a battery cell typically refers to a design where multiple layers of electrode material are stacked on top of each other within the cell. This stacking of electrode layers can increase the overall capacity and energy density of the battery while maintaining a small cell size under a given form factor. In one configuration, multiple layers of anode material are stacked within the cell. Each anode layer contributes to the capacity of the cell. This design is commonly used in lithium-ion batteries, where stacked anode materials (typically graphite or other carbon-based materials) allow for higher energy storage capacity. Similarly, multiple layers of cathode material can be stacked within the cell. Each cathode layer adds to the capacity of the cell. Stacked cathodes are often used in lithium-ion batteries as well. Battery cells typically use alternating layers of anode and cathode materials to create a stacked configuration. This design can increase both capacity and energy density, providing a balance between anode and cathode contributions. In other configurations, such as solid-state batteries, layers of anode, cathode, and electrolyte materials are stacked together.

A separator in a battery can refer to a component positioned between a cathode (positive electrode) and an anode (negative electrode) to prevent them from coming into direct contact and causing a short circuit, while simultaneously allowing the transfer of ions between the electrodes during charge and discharge cycles. In the context of a battery stack, where multiple cell units might be layered or arranged in a pack to achieve desired voltage and capacity, separators are positioned between the electrodes of each individual cell unit. Additionally, or alternatively a single separator can be arranged such that it separates a plurality of electrodes from contacting each other, e.g. within a z-folding.

Generally, a separator may be a sheet or film material. A typical thickness for a separator may be 8 µm to 35 µm, in particular 20 µm. A separator may comprise cellophane, nylon or desirably polyvinylidene fluoride (PVDF) or polyolefin. A separator may also comprise glass fiber. Soaking a separator with an additive, e.g. sulfuric acid, may be desirably. The material of the separator or at least the adhesive coating (or coating layer) of the separator may be a meltable material. Furthermore, a separator may in particular be laminated or coated. A coating of a separator may comprise cellophane, nylon or desirably polyvinylidene fluoride (PVDF) or polyolefin.

Compressing the electrode stack may primarily ensure a decrease of the distance between the electrodes within a stack. Furthermore, compressing the electrode stack may desirable due to requirements concerning the dimensions of an electrode stack, e.g. for packaging.

Insofar, once a plurality of layers, i.e. multiple units of electrodes and separators or battery cell units, has been assembled to an electrode stack, the electrode stack can be compressed. In particular, all layers of an electrode stack for a battery cell can be assembled and afterwards the whole electrode stack can be compressed. Compressing an electrode stack (or a part of an electrode stack) facilitates the alignment of the tabs on the side of the electrode stack. Furthermore, the electrode stacks dimensions, e.g. its height, can be reduced for improved packaging of the electrode stack.

Compressing may be carried out by a press with e.g. a press stamp. A press may be a hydraulic press or may in particular be an electric motor press. An electric motor press may be desirable as no spilling of hydraulic fluid is possible. An electrode stack may also be positioned within guide rails, side walls or a guiding chamber to avoid a bending or pivoting of the electrode stack during pressing. In one example, an electrode stack may also be compressed within its housing. A maximum pressure or clamping force during clamping must be adapted to the individual layers of the electrode stack, i.e. to the electrodes and the separator, in particular to the size and material of the separator.

The battery cell units of an electrode stack may be adhesively bonded together, e.g. glued. Other methods of bonding are also possible. Such a bonding process may in particular be carried out during or after compressing.

Heating of the electrode stack may comprise the introduction of heat to at least one, preferably all battery cell units within the electrode stack. Heat transfer may be carried out through conduction, convection or radiation. In particular, Heat transfer may be carried out through conduction of the electrodes.

Heating the electrode stack may be carried out via a press stamp that can be heated, e.g. with an induction wire or a heating wire, and/or a mating piece of a press stamp that can be heated, wherein the press stamp and the mating piece are aligned on opposite ends of an electrode stack. Thus, heat may be transferred uniformly from the two end sides of an electrode stack. Additionally, further heating plates may be used on one or multiple sides of an electrode stack.

Generally, heating of the electrode stack may also be carried out and/or supported via other heating elements, a heated environment and/or heating rays or lasers.

During the compressing of the electrode stack, the separator is subject to a clamping force from one or both sides of its profile.

By heating the electrode stack while the electrode stack is in a compressed state to a temperature that is greater than or equal to a melting temperature of an adhesive coating (or coating layer) of the separator and/or the melting temperature of a lamination or coating, such that a part of the separator, i.e. its adhesive coating (or coating layer) is melted, while the separator is subject to a clamping force from both sides of its profile, the distance between individual electrodes can be further reduced. It is in particular possible, that a lamination or a coating of a separator is melted and the distance between individual electrodes can thus be further reduced.

Furthermore, an adhesive bond can be created between the electrodes and a separator, as the melted separator, and/or a melted lamination or coating, may adhere to the electrodes it is in contact with. Such an adhesive bond may in particular increase when the separator is cooled. Thus, the mechanical stability of an electrode stack may be further increased.

When compressing the melted separator in between two electrodes it is also possible, that a very small part of the separator, and/or the lamination or coating, may "spill" over the edges of one or more electrodes and thus strengthen the bond between said separator and this electrode or these electrodes.

The method may further comprises bending the tabs of the electrodes, and/or the electrode stack may be heated by heating the bent tabs.

The tabs may be bend, or otherwise e.g. folded or angled, in order to be formed on the side of the electrode stack. The tabs can be formed such that they contact each other on the side of the electrode stack and build a common contact area. With their part on the side of the electrode stack, the tabs of a common electrode type (cathode tabs or anode tabs) may be connected to a contact element.

Bending of the tabs may for example be carried out via e.g. cylindrical rollers, rolling along at least parts of at least one side of an electrode stack. Bending of the tabs may also be carried out via folding levers that are folded on top of one or multiple tabs. Other methods of bending the tabs are also possible.

The tabs of the other electrode type can be connected to another contact element. The contact element can be configured thermally conductive, electrically conductive, or both. Thus, the tab area on the side of the electrode stack can provide a large contacting area for cooling/heating and electrical contacting, i.e. an increased heat dissipation surface, especially in view of the compact design of the energy storage device.

Heating the tabs may comprise the introduction of heat to at least one, preferably all tabs. Heat transfer may be carried out through conduction, convection or radiation.

Heating the tabs may be carried out via a press stamp that can be heated, e.g. with an induction wire or a heating wire, and/or a mating piece of a press stamp that can be heated, wherein the press stamp and the mating piece are aligned on opposite ends of an electrode stack. Thus, heat may be transferred uniformly from the two end sides of an electrode stack. Additionally, further heating plates may be used on one or multiple sides of an electrode stack.

Generally, heating of the tabs may also be carried out and/or supported via other heating elements, a heated environment and/or heating rays or lasers.

The bent tabs may be heated while the electrode stack is in a compressed state.

During the compressing of the electrode stack, the separator is subject to a clamping force from one or both sides of its profile.

By heating the tabs to a temperature that is greater than or equal to a melting temperature of an adhesive coating (or coating layer) of the separator, such that the separator is melted, while the separator is subject to a clamping force from both sides of its profile, the distance between individual electrodes can be further reduced. It is also possible, that a lamination or a coating of a separator is melted and the distance between individual electrodes can thus be further reduced.

Furthermore, an adhesive bond can be created between the electrodes and a separator, as the melted separator, and/or a melted lamination or coating, may adhere to the electrodes it is in contact with. Such an adhesive bond may in particular increase when the separator is cooled. Thus, the mechanical stability of an electrode stack may be further increased. Furthermore, the produced energy storage device can thus obtain a compact design.

When compressing the melted separator in between two electrodes it is also possible, that a very small part of the separator, and/or the lamination or coating, may "spill" over the edges of one or more electrodes and thus strengthen the bond between said separator and this electrode or these electrodes.

The separator may comprise a meltable material, wherein
the bent tabs are heated to a temperature that is greater than or equal to a melting temperature of an adhesive coating (or coating layer) of the separator, such that the adhesive coating (or coating layer) of the separator is melted.

A separator may comprise nylon or desirably polyvinylidene fluoride (PVDF) or polyolefin. Furthermore, a separator may in particular be laminated or coated. A lamination or coating may comprise nylon or desirably polyvinylidene fluoride (PVDF) or polyolefin.

By heating the tabs, an energy efficient way of introducing heat into the electrode stack and therewith melting the adhesive coating (or coating layer) of the separators is given. Merely introducing heat from the outside, e.g. via heating plates or radiation, may be energetically inefficient and create an undesirable, inhomogeneous heating of the electrode stack, in particular the profile of an electrode or separator. Insofar, when only heated from the outside of an electrode stack, an individual electrode and/or an individual separator may have a very high temperature close to the sides of the electrode stack and a much lower temperature in the center of said electrode and/or separator. This can lead to an undesirable uneven melting of one or more separators.

Depending on the material that a tab consists of the tabs may comprise a very high thermal conductivity and may thus transfer the heat from outside of the electrode stack to the inside of the electrode stack, e.g. to the separator, or vice versa, quickly and efficiently. Examples of such materials may be copper, aluminum or graphite. By such a heat transfer, a desirable homogenous heating of the separator is possible. In particular, a homogenous melting of the adhesive coating (or coating layer) of the separator is possible.

Compressing the electrode stack may comprise:
heating a stamp used for compressing the electrode stack to a temperature that is greater than or equal to a melting temperature of the adhesive coating (or coating layer) of the separator.

Heating a stamp may be achieved e.g. via induction. A stamp may for this reason include an induction wire or a heating wire. A stamp may also be heated with for example a laser.

Introducing heat to an electrode stack via a heated stamp is in particular desirable as the contract surface and the contact force between the electrode stack and the stamp is, during compressing, rather high. Thus, ideal conditions for a conductive heat transfer from the stamp to the electrode stack are achieved.

As heating a stamp requires few components, complexity of the machinery required can be kept to a minimum. Introducing heat to the electrode stack during compressing may thus be achieved easily and with low machinery complexity.

The meltable layer on the separator may be melted, such that electrodes and separator form an adhesive bond, so that the electrode stack substantially remains in the compressed shape when the compression is released from the electrode stack. Accordingly, the produced energy storage device can have a compact design.

A meltable layer of a separator may in particular be a lamination or a coating of a separator. A lamination or coating of a separator may for example comprise polyvinylidene fluoride (PVDF).

By forming an adhesive bond during compression, an electrode stack can be obtained that substantially remains in the compressed shape when the compression is released. Thus, the distance between the electrodes of said stack remains reduced in comparison to the pre compression distance. Furthermore, no housing and/or no brackets are required to keep the compressed form of the electrode stack after compressing.

Such an adhesive bond may in particular increase when the separator is cooled. Thus, the mechanical stability of an electrode stack may be further increased.

At least two electrodes of the electrode stack may be electrically interconnected by bending the tabs.

Insofar, the bent tab of a first electrode may contact the bent tab of a second electrode. In particular, said tabs may overlap. It is possible that further tabs of further electrodes overlap with these tabs.

Following from this, an electrically conductive contact between two or more electrodes may be easily established by bending the tabs of two or more electrodes.

Desirably, every tab should be bend such that a tab of one electrode type (cathode or anode) does not contact an electrode of an opposite electrode type (anode or cathode) or its respective tab. Otherwise a shortcut could occur that could lead to a thermal runway, i.e. a defect, of the battery cell.

Providing an electrode stack may comprise: forming the tabs such that they are arranged essentially coplanar to the respective electrodes, wherein
after bending the tabs, the bent tabs are arranged essentially perpendicular to a plane defined by the respective electrodes.

The tabs can be arranged such that they extend the electrode stack and such that they are arranged above each other. In this case, they can be formed such that they are co-planar to their electrode in a non-final state of the battery.

In a later stage or final battery cell, the tabs of at least one type of electrode can be bent and/or angled such that they cover a side of the electrode stack and are thus essentially perpendicular to a plane defined by the respective electrodes. The bending and/or angling, of the tabs may occur during the manufacturing process or later, in particular before the battery stack is inserted into a housing. In this way the electrode stack can be equipped with a tab area on the side of the electrode stack.

Providing an electrode stack may comprise:
forming a bending line at each tab, wherein the bending line may optionally be formed by reducing the thickness of the tab.

A bending line may aide in bending each tab at precisely the same place and angle of the respective tab. A bending line may thus be a line along a tab that is particularly prone to bending when an external force is applied to said tab.

By reducing the thickness of a tab at a bending line, the strength of the material at this bending line is lower than that surrounding the bending line. Thus, the bending line becomes particularly prone to bending when an external force is applied to the tab.

The thickness along a bending line may for example result by clamping a tab between a sword and a mating piece. It is also possible to scratch a tab alongside the bending line and thus remove material to make the bending line prone to bending. Such a scratch may be introduced mechanically or via a laser.

By providing such a bending line it can be ensured, that each identically designed tab will also bend at the same spot, i.e. the bending line, when an external force is applied to bend the tab. In this way, the identical tabs may all bend in an identical way and may overlap each other with a precise measure of overlap.

Heating the bent tab of the at least one electrode may comprise at least one of: welding, brazing, soldering, and/or adhesive bonding.

The electrodes may comprise anodes, each comprising a tab, and cathodes, comprising each a tab, the anodes and cathodes being arranged alternately in the electrode stack, wherein
the method may comprise bending the tabs of the anodes and the tabs of the cathodes, such that after bending the tabs of the anodes and the tabs of the cathodes are directed in opposite directions.

If all tabs protrude on one side of an electrode stack, the tabs of one kind of electrode, e.g. the cathode, may be arranged in one half, e.g. the left half, of that side of the electrode stack, while the tabs of the other kind of electrode, e.g. the anode, may be arranged in the other half, e.g. the right half, of that side of the electrode stack. In this way it can be ensured, that tabs of different kinds of electrodes do not come into contact.

The direction in which the tabs are bent may be determined as follows: the tab that is on the upper electrode of the electrode stack, and one or all tabs positioned directly underneath this tab, may be angled downwards and the tab that is on the lower electrode of the electrode stack, and one or all tabs positioned directly above this tab, may be angled upwards. In this manner, no folded tab extends over the electrode stack. Additionally, the remaining tabs that are connected to electrodes that have the same type as the upper electrode can be angled downwards. Additionally or alternatively, the remaining tabs that are connected to electrodes of opposing type can be angled upwards.

The tabs of the anodes may be arranged adjacent to the tabs of the cathodes on the same side of the electrode stack, or
the tabs of the anodes and the tabs of the cathodes may be arranged on different sides of the electrode stack.

If all tabs protrude on one side of an electrode stack, the tabs of one kind of electrode, e.g. the cathode, may be arranged in one half, e.g. the left half, of that side of the electrode stack, while the tabs of the other kind of electrode, e.g. the anode, may be arranged in the other half, e.g. the right half, of that side of the electrode stack. In this way it can be ensured, that tabs of different kinds of electrodes do not come into contact.

If the tabs of the one kind of electrode, e.g. the cathode, protrude on one side of the electrode stack, the tabs of the other kind of electrode, e.g. the anode, may protrude on a different side of the electrode stack. Thus, it can be easily ensured, that tabs of different kinds of electrodes do not come into contact.

The present disclosure further relates to an energy storage device produced by any one of the aforementioned methods.

Such an energy storage device may be a battery consisting of one or more battery cells, in particular multiple battery cells within an electrode stack.

An energy storage device may in particular comprise an electrode stack, wherein the electrode stack is compressed. The separator and/or a meltable layer of a separator, e.g. a lamination of a separator, of said electrode stack may be molten, e.g. during compression, and thus adhere to one or more electrodes. Such an electrode stack will comprise a high mechanical strength and furthermore remain in its compressed dimensions even after the compressing force has been released.

In one example, an energy storage device may also comprise an electrode stack wherein all electrodes comprise bend tabs. In particular, all tabs may protrude on one side of an electrode stack, the tabs of one kind of electrode, e.g. the cathode, may be arranged in one half, e.g. the left half, of that side of the electrode stack, while the tabs of the other kind of electrode, e.g. the anode, may be arranged in the other half, e.g. the right half, of that side of the electrode stack.

The tabs of one kind of electrode may be bend in such a manner, that the tabs of at least two electrodes are electrically connected.

The present disclosure further relates to a system for producing an energy storage device, the system comprising:
at least one side wall configured to align an electrode stack, wherein the electrode stack comprises at least two electrodes having each a tab, wherein a separator is arranged between the electrodes,
a stamp configured to compress the electrode stack, and
at least a first roller configured to bend the tabs.

A system for producing an energy storage device may in particular be configured to carry out one of the aforementioned methods.

An electrode stack may consist of multiple individual battery cells connected in series or parallel and enclosed in a housing. An electrode stack in a battery cell typically refers to a design where multiple layers of electrode material are stacked on top of each other within the cell. This stacking of electrode layers can increase the overall capacity and energy density of the battery while maintaining a small cell size under a given form factor.

A separator in a battery can refer to a component positioned between a cathode (positive electrode) and an anode (negative electrode) to prevent them from coming into direct contact and causing a short circuit, while simultaneously allowing the transfer of ions between the electrodes during charge and discharge cycles. In the context of a battery stack, where multiple cells might be layered or arranged in a pack to achieve desired voltage and capacity, separators are positioned between the electrodes of each individual cell.

Every tab should be formed such that a tab of one electrode type (cathode or anode) does not contact an electrode of an opposite electrode type (anode or cathode) or its respective tab. Otherwise a shortcut could occur that could lead to a thermal runway, i.e. a defect, of the battery cell.

All tabs may protrude on one side of an electrode stack, the tabs of one kind of electrode, e.g. the cathode, may be arranged in one half, e.g. the left half, of that side of the electrode stack, while the tabs of the other kind of electrode, e.g. the anode, may be arranged in the other half, e.g. the right half, of that side of the electrode stack. In this way it can be ensured, that tabs of different kinds of electrodes do not come into contact.

A side wall may guide the electrodes of an electrode stack so that their edges align. Desirably, two side walls may be provided enclosing an angle identical to the angle of at least one of the corners of an electrode. Insofar, electrodes of an electrode stack can be aligned on two and thus all their edges when positioned against both side wall.

Desirably, the electrode stack may be positioned against a side wall with one of its sides, wherein no tabs protrude from this side. Insofar, an alignment of the electrodes against said side wall is facilitated. However, in one example, at least one side wall may comprise a grove or a recess in order to accommodate the tabs protruding from a side of an electrode stack that is positioned against said side wall.

Compressing may be carried out by a press with e.g. a press stamp. A press may be a hydraulic press or may in particular be an electric motor press. An electric motor press may be desirable as no spilling of hydraulic fluid is possible. One or multiple side walls may aide during compressing to avoid a bending or pivoting of the electrode stack during pressing. In one example, an electrode stack may also be compressed within its housing, the side walls being part of said housing. A maximum pressure or clamping force during clamping must be adapted to the individual layers of the electrode stack, i.e. to the electrodes and the separator, in particular to the size and material of the separator.

A stamp may be heated, e.g. with an induction wire or a heating wire.

In order to bend the tabs, a roller may be configured as a cylindrical roller, configured to roll along at least parts of at least one side of an electrode stack. A tab on this side of an electrode stack may be bend in the direction in which the roller is rolling.

A roller may furthermore be configured to apply a force perpendicular to its rolling direction, e.g. onto the side of an electrode stack when the roller is rolling e.g. from the top of the electrode stack to the bottom of the electrode stack. Such a force may be adjustable in order to adapt the intended bend of the tabs. A stronger force may lead to a further bending, or less spring back, of a tab.

In an example, where at least one side wall comprises a grove or a recess in order to accommodate the tabs protruding from a side of an electrode stack that is positioned against said side wall, a roller may be configured to roll in, i.e. through, said grove or recess.

The roller may be configured to be heated, and/or
the system may further comprise a heat stamp configured to heat the bent tabs.

Applying heat during bending may fortify the bend of the tabs.

A roller and/or a stamp may be heated with e.g. an induction wire or a heating wire. A roller and/or a stamp may also be heated with a laser.

Furthermore, with on or multiple heated rollers and/or stamps, the tabs may be heated to a temperature that is greater than or equal to a melting temperature of the separator, and/or of a lamination or coating, such that the separator, and/or the lamination or coating, is melted.

By heating the tabs to a temperature that is greater than or equal to a melting temperature of the separator, such that the separator, and/or a lamination or coating, is melted, while the separator is subject to a clamping force from both sides of its profile, the distance between individual electrodes can be further reduced.

Furthermore, an adhesive bond can be created between the electrodes and a separator, as the melted separator, and/or the melted lamination or coating, may adhere to the electrodes it is in contact with. Such an adhesive bond may in particular increase when the separator is cooled. Thus, the mechanical stability of an electrode stack may be further increased.

A system may further comprise a second roller arranged adjacent to the first roller on the same side of the electrode stack, or on another side of the electrode stack than the first roller,
wherein the electrodes comprise anodes comprising each a tab, and cathodes comprising each a tab, the anodes and cathodes being arranged alternately in the electrode stack, wherein
the first roller is configured to bend the tabs of the anodes and the second roller is configured to bend the tabs of the cathodes, optionally such that after bending the tabs of the anodes and the tabs of the cathodes are directed in opposite directions.

Multiple rollers may be provided moving in the same or opposite directions. Two rollers may be configured to roll on one identical or different sides of an electrode stack. In one example where two rollers are configured to roll on one identical side of an electrode stack, these rollers may roll in different halves of said side, e.g. the right half and the left half. Two rollers may also be configured to roll on the same side and to bend the same tabs, for example to fortify the bend of the corresponding tabs.

The direction in which the rollers are rolled, and thus in which the tabs are bent, may be determined as follows: the tab that is on the upper electrode of the electrode stack, and one or all tabs positioned directly underneath this tab, may be angled downwards. The corresponding roller for these tabs may thus roll from the top of the electrode stack to its bottom. The tab that is on the lower electrode of the electrode stack and one or all tabs positioned directly above this tab, may be angled upwards. The corresponding roller for these tabs may thus roll from the bottom of the electrode stack to its top. In this manner, no folded tab extends over the electrode stack. Additionally, the remaining tabs that are connected to electrodes that have the same type as the upper electrode can be angled downwards. Additionally or alternatively, the remaining tabs that are connected to electrodes of opposing type can be angled upwards.

The technology provided by the present disclosure may be applied in the production of various types of batteries such as lithium-ion secondary batteries. In particular to such batteries containing nickel or other moisture-sensitive materials. Other compatible examples of batteries may be sodium-ion batteries, potassium-ion batteries, magnesium-ion batteries, calcium-ion batteries, magnesium-sulfur batteries, or aluminum-ion batteries. The technology provided by the present disclosure may also be applied in various types of metal ion capacitors, such as lithium-ion capacitors.

It is intended that combinations of the above-described elements and those within the specification may be made, except where otherwise contradictory.

It is to be understood that both the foregoing general description and the following detailed description are exemplary and explanatory only, are provided for illustration purposes, and are not restrictive of the disclosure, as claimed.

The accompanying drawings, which are incorporated in and constitute a part of this specification, illustrate examples of the disclosure and together with the description and serve to support and illustrate the principles thereof.

### BRIEF DESCRIPTION OF THE DRAWINGS

Fig. 1 shows an exemplary electrode stack comprising five battery cell layers stacked on top of one another according to one example of the present disclosure.
Fig. 2a shows an exemplary stage of carrying out one exemplary method according to one example of the present disclosure.
Fig. 2b shows a further exemplary stage of carrying out one exemplary method according to one example of the present disclosure.
Fig. 3a shows a further exemplary stage of carrying out one exemplary method according to one example of the present disclosure.
Fig. 3b shows a further exemplary stage of carrying out one exemplary method according to one example of the present disclosure.
Fig. 4a shows a further exemplary stage of carrying out one exemplary method according to one example of the present disclosure.
Fig. 4b shows a further exemplary stage of carrying out one exemplary method according to one example of the present disclosure.
Fig. 5a shows a further exemplary stage of carrying out one exemplary method according to one example of the present disclosure.
Fig. 5b shows a further exemplary stage of carrying out one exemplary method according to one example of the present disclosure.
Fig. 6 shows a further exemplary electrode stack comprising five battery cell layers stacked on top of one another in a housing according to one example of the present disclosure.

### DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

All figures show an energy storage device 1. The energy storage device comprises an electrode stack 2 comprising at least two electrodes 3. Each electrode 3 has a tab 4 and a separator 5 is arranged between the electrodes 3.

Insofar, each electrode stack 2 comprises multiple battery cell units (or battery cell layers) 6, wherein a battery cell unit (i.e. a battery cell layer) 6 is an assembly of two electrodes 3. In particular, each battery cell unit 6 consists of two electrodes 3, e.g. a positive electrode 3 and a negative electrode 3, separated by a separator 5.

Every electrode 3 is shown as a foil. An electrode 3 may for example consist of a 15 - 25 µm thick aluminum foil.

Every electrode 3 features a current collector 7 and a tab 4. A current collector 7 is an electrically conductive metallic foil. Furthermore, every current collector 7 comprises a tab 4. A tab 4 is a foil part of the current collector 7 protruding from said current collector 7. Though the current collector 7 and the tab 4 are shown in a different hatching and comprise a different reference sign, they may be one piece.

Every tab 4 is formed such that a tab 4 of one type of electrode 3 (cathode or anode) does not contact an electrode 3 of an opposite type of electrode 3 (anode or cathode) or its respective tab 4. To support this arrangement, the electrodes 3 are arranged in a staggered way, such that on one side only electrodes 3 of a certain type protrude, and the electrodes 3 of the other type protrude on the other side.

The separator 5 may be film material. A typical thickness for a separator 5 may be 15 µm to 35 µm, in particular 20 µm. A separator 5 may comprise cellophane, nylon or desirably polyvinylidene fluoride (PVDF) or polyolefin.

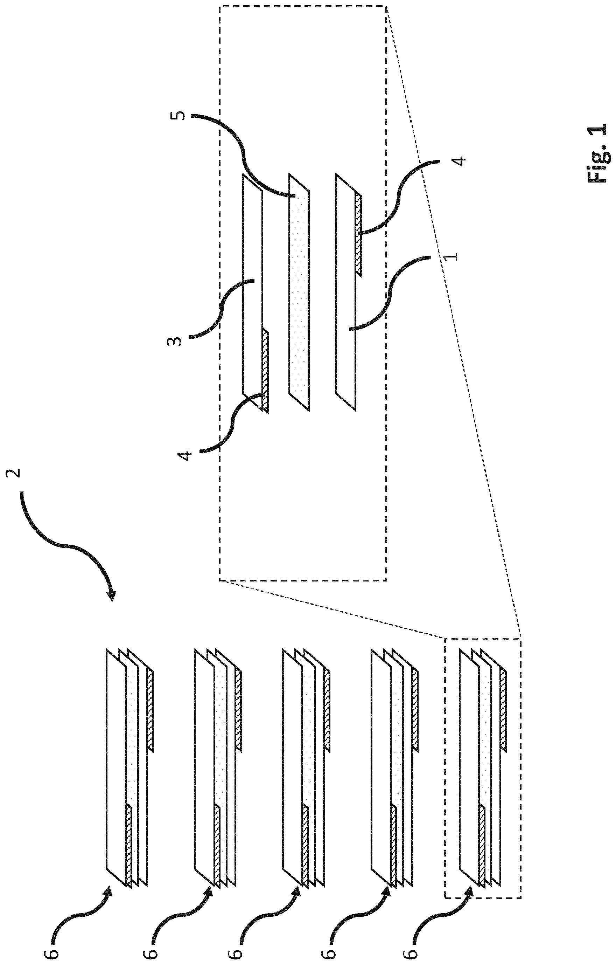

In fig. 1 the electrode stack 2 is in an uncompressed state, in fact, the battery cell units 6 are shown in an exploded view. The bottom battery cell unit 6 is furthermore shown in an enlarged exploded view on the right side of fig. 1.

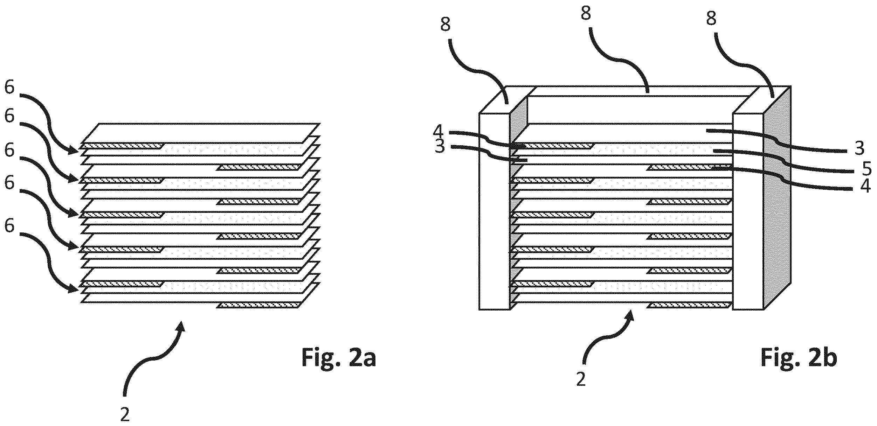

The figures fig. 2a, fig. 2b, fig. 3a, fig. 3b, fig. 4a, fig. 4b, fig. 5a and fig. 5b show each a different stage of an exemplary method for producing an energy storage device 1, the method comprising: providing an electrode stack 2 comprising at least two electrodes 3 having each a tab 4, wherein a separator 5 is arranged between the electrodes 3, compressing the electrode stack 2, and heating the electrode stack 2 while the electrode stack 2 is in a compressed state.

In fig. 2a an electrode stack 2 is shown in an uncompressed state. Insofar, an electrode stack 2 is provided. The battery cell units 6 of the electrode stack 2 are stacked on top of one another but not compressed.

The tabs 4 of the provided electrode stack 2 are formed such that they are arranged essentially coplanar to the respective electrodes 3. The tabs 4 are thus arranged such that they extend the electrode stack 2 and such that they are arranged above each other, if they are of the same type of electrode 3.

In fig. 2b, the electrode stack 2 of fig. 2a is shown, wherein side walls 8 are positioned alongside the electrode stack 2.

The side walls 8 are encasing the electrode stack 2 from three sides. Insofar, the side walls 8 are arranged at the sides of the electrode stack 2 and the back. Furthermore, the side walls 8 enclose an angle identical to the angle of one of the corners of an electrode 3. The side of the electrode stack 2 where the tabs 4 protrude is not encased. Insofar, the electrode stack 2 is positioned against a side wall 8 with one of its sides, wherein no tabs 4 protrude from this side. An alignment of the electrodes 3 against said side wall 8 is thus facilitated.

The electrode stack 2 may be positioned on a surface not shown in the figures. Such a surface may also be a side wall or possibly a different part of manufacturing equipment.

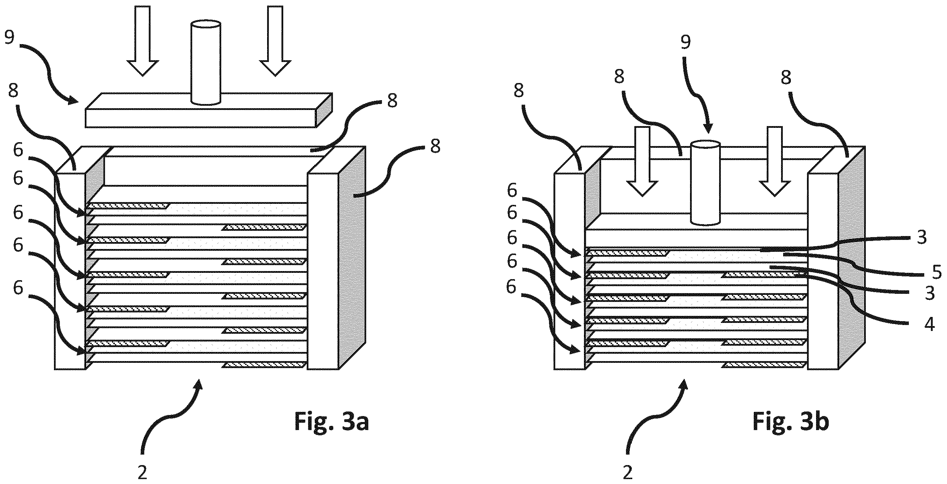

In fig. 3a, a press stamp 9 is shown being lowered onto the electrode stack 2 from the top. The press stamp 9 is configured so that it fits seamlessly in between the side walls 8. The press stamp 9 is furthermore configured so that its pressing surface is identical to the surface of an electrode 3 of a battery cell unit 6. Insofar, the clamping force of the press stamp 9 can be applied equally along the whole length and width of the electrodes 3.

In fig. 3b, a pressure force is applied and the press stamp 9 is compressing the electrode stack 2.

The compressing of the electrode stack 2 is thus carried out with a press not shown in the fig. 3b comprising a press stamp 9. Such a press may be an electric motor press. The side walls 8 aid in the compressing of the electrode stack 2 as they prevent a bending or pivoting of the electrode stack 2 during compressing.

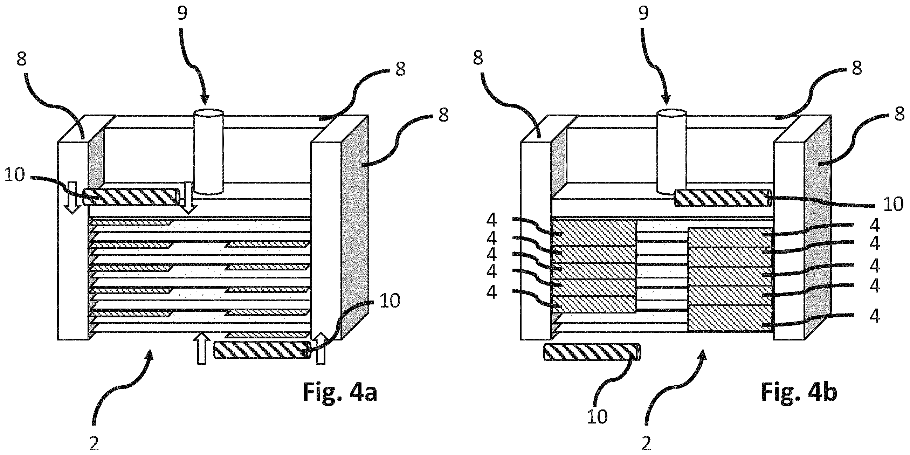

In fig. 3b, fig. 4a and fig. 4b, the electrode stack 2 is shown in a compressed state while a clamping force is applied through press stamp 9. In these figures, heating the electrode stack 2 while the electrode stack 2 is in a compressed state may be carried out.

Heating of the electrode stack 2 may comprise the introduction of heat to at least one, preferably all battery cell units 6 within the electrode stack 2. Heat transfer may be carried out through conduction, convection or radiation. In particular, Heat transfer may be carried out through conduction of the electrodes 3.

Heating the electrode stack 2 may be carried out via a press stamp 9 that can be heated, e.g. with an induction wire or a heating wire, and/or a mating piece of a press stamp 9 that can be heated, wherein the press stamp 9 and the mating piece are aligned on opposite ends of an electrode stack 2. Such a mating piece is not shown in the figures but may generally be aligned at the bottom of the electrode stack 2 shown in fig 3b, fig. 4a and fig. 4b. Thus, heat may be transferred uniformly from the two end sides of an electrode stack 2. Additionally, further heating plates also not shown in the figures may be used on one or multiple sides of an electrode stack 2.

In fig. 4a and fig. 4b, two cylindrical rollers 10 are shown adjacent to each other and on opposite ends of the electrode stack 2 positioned on the side of the electrode stack 2 where the tabs 4 protrude.

The rollers 10 are configured to roll along parts the side of the electrode stack 2 where the tabs 4 protrude. As the tabs 4 of one type of electrode 3 are aligned on one half of this side of the electrode stack 2 and the tabs 4 of the other type of electrode 3 are aligned on the other half of this side of the electrode stack 2, one roller 10 is configured to bend the tabs 4 of one type and the other roller 10 is configured to bend the tabs 4 of the other type.

The rollers 10 are in particular configured to bend the tabs 4 in the direction in which each roller 10 is rolling. Insofar, the roller 10 shown on the left of fig. 4a is configured to roll from the top of the electrode stack 2 to its bottom, thus bending the tabs 4 downwards. The roller 10 shown on the right of fig. 4b is configured to roll from the bottom of the electrode stack 2 to its top, thus bending the tabs 4 upwards.

The direction in which the rollers 10 are rolled, and thus in which the tabs 4 are bent, may be determined as follows: the tab 4 that is on the upper electrode 3 of the electrode stack 2, and all tabs 4 positioned directly underneath this tab 4, may be angled downwards. The corresponding roller 10 for these tabs 4 may thus roll from the top of the electrode stack 2 to its bottom. The tab 4 that is on the lower electrode 3 of the electrode stack 2 and all tabs 4 positioned directly above this tab 4, may be angled upwards. The corresponding roller 10 for these tabs 4 may thus roll from the bottom of the electrode stack 2 to its top. In this manner, no folded tab 4 extends over the electrode stack 2.

A roller 10 may furthermore be configured to apply a force perpendicular to its rolling direction, e.g. onto the side of the electrode stack 2 when the roller 10 is rolling. Such a force may be adjustable in order to adapt the intended bend of the tabs 4. A stronger force may lead to a further bending, or less spring back, of a tab 4.

In fig. 4b, the rollers 10 have been rolled alongside the electrode stack 2, e.g. from the top of the electrode stack 2 to its bottom. Insofar, the tabs 4 have been bend by the rolling of the respective roller 10.

In fig. 4b, fig. 5a, fig. 5b and fig. 6, the tabs 4 are thus bend and formed on the side of the electrode stack 2. The tabs 4 are bend such that they contact each other on the side of the electrode stack 2 and build a common contact area. Insofar, after bending of the tabs 4, the tabs 4 are arranged essentially perpendicular to a plane defined by the respective electrodes 3.

The electrodes 3 of the same type are electrically interconnected by bending the tabs 4. Insofar, the bent tab 4 of a first electrode 3 contacts the bent tab 4 of a second electrode 3. In particular, said tabs 4 may overlap.

A roller 10 may be heated with e.g. an induction wire or a heating wire. A roller 10 may also be heated with a laser. Applying heat during bending of the tabs 4, i.e. during the rolling of the rollers 10, may fortify the bend of the tabs 4.

Furthermore, with on or multiple heated rollers 10 and/or press stamps 9, the tabs 4 may be heated to a temperature that is greater than or equal to a melting temperature of the adhesive coating (or coating layer) of the separator 5, and/or of a lamination or coating of said separator 5, such that the separator 5, and/or the lamination or coating, is melted.

Generally, heating of the tabs 4 may also be carried out and/or supported via other heating elements, a heated environment and/or heating rays or lasers.

Hence, fig. 4a and fig. 4b also show a system comprising three side walls 8 configured to align an electrode stack 2, wherein the electrode stack 2 comprises two electrodes 3 having each a tab 4, wherein a separator 5 is arranged between the electrodes 3, a press stamp 9 configured to compress the electrode stack 2, and two rollers 10 configured to bend the tabs 4.

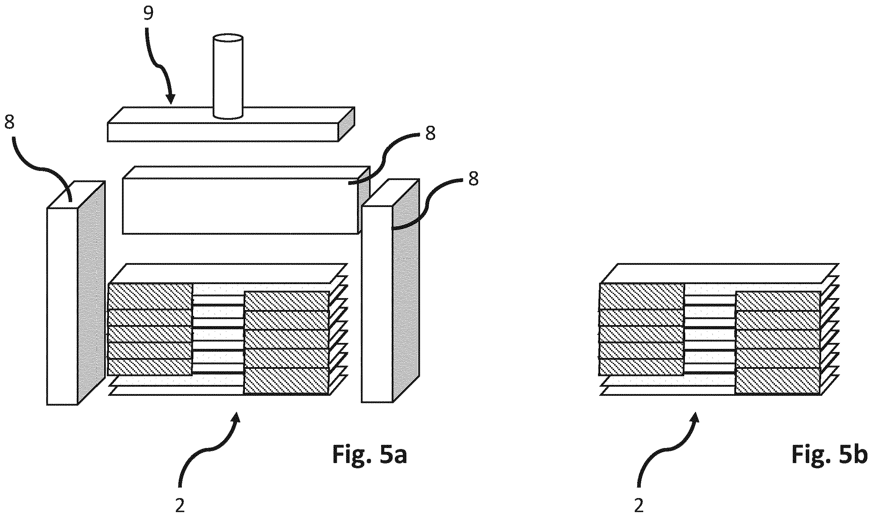

In fig. 5a, the electrode stack 2 is shown while the rollers 10, the press stamp 9 and the side walls 8 are being removed. Insofar, fig. 5a and fig. 5b show an electrode stack 2 and thus an energy storage device 1 produced by one exemplary method of the present disclosure.

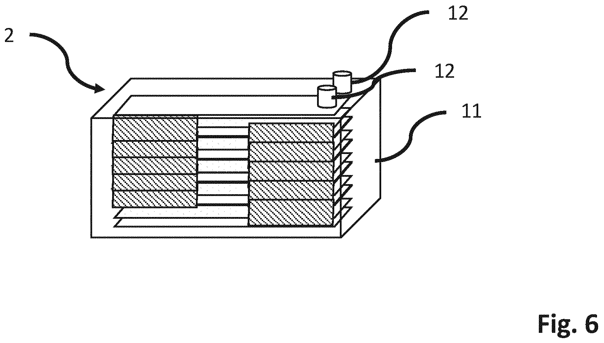

In fig. 5a, fig. 5b and fig. 6, the electrode stack 2 remains in its compressed form even though no clamping force is applied. By heating the electrode stack 2 while the electrode stack 2 is in a compressed state to a temperature that is greater than or equal to a melting temperature of the separator 5 and/or the melting temperature of a lamination or coating, such that a part of the separator 5 is melted, while the separator 5 is subject to a clamping force from one or both sides of its profile, the distance between individual electrodes 3 can be further reduced and an adhesive bond can be created between the electrodes 3 and a separator 5, as the melted separator 5, and/or a melted lamination or coating, may adhere to the electrodes 3 it is in contact with. Thus, a spring back of the electrodes 3 and the electrode stack 2 does not occur.

In fig. 6 an energy storage device 1 is shown comprising an electrode stack 2, e.g. of fig. 5b and a housing 11. The housing 11 encloses the electrode stack 2. The housing furthermore comprises two openings 12 through which the electrode stack 2 can be contacted with an external electrical circuit.

Throughout the description, including the claims, the term "comprising a" should be understood as being synonymous with "comprising at least one" unless otherwise stated. In addition, any range outlined in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described regarding particular examples, it is to be understood that these examples are merely illustrative of the principles and applications of the present disclosure.

It is intended that the specification and examples be considered as exemplary only, with a true scope of the disclosure being indicated by the following claims.

### DESCRIPTION OF THE DRAWINGS

- 1.: Energy storage device
- 2.: Electrode stack
- 3.: Electrode
- 4.: Tab
- 5.: Separator
- 6.: Battery cell unit (i.e. a battery cell layer)
- 7.: Current collector
- 8.: Side wall
- 9.: Press stamp
- 10.: Roller
- 11.: Housing
- 12.: Opening

## Claims

1. A method of producing an energy storage device (1), the method comprising:
providing an electrode stack (2) comprising at least two electrodes (3) having each a tab (4), wherein a separator (5) is arranged between the electrodes (3),
compressing the electrode stack (2), and
heating the electrode stack (2) while the electrode stack (2) is in a compressed state.

2. The method according to claim 1, wherein
the method further comprises bending the tabs (4) of the electrodes (3), and/or
the electrode stack (2) is heated by heating the bent tabs (4).

3. The method according to claim 1 or 2, wherein
the separator (5) or an adhesive coating of the separator comprises a meltable material, wherein
the bent tabs (4) are heated to a temperature that is greater than or equal to a melting temperature of the separator (5) or the adhesive coating of the separator, such that the separator (5) or the adhesive coating is melted.

4. The method according to any one of the preceding claims, wherein compressing the electrode stack (2) comprises:
heating a stamp (9) used for compressing the electrode stack (2) to a temperature that is greater than or equal to a melting temperature of the separator (5) or the adhesive coating.

5. The method according to any one of the preceding claims, wherein
a meltable layer, optionally being the or the adhesive coating, arranged on the separator (5) is melted, such that electrodes (3) and separator (5) form an adhesive bond, so that the electrode stack (2) substantially remains in the compressed shape when the compression is released from the electrode stack (2).

6. The method according to any one of the preceding claims, wherein
at least two electrodes (3) of the electrode stack (2) are electrically interconnected by bending the tabs (4).

7. The method according to any one of the preceding claims, wherein providing an electrode stack (2) comprises:
forming the tabs (4) such that they are arranged essentially coplanar to the respective electrodes (3), wherein
after bending the tabs (4), the bent tabs (4) are arranged essentially perpendicular to a plane defined by the respective electrodes (3).

8. The method according to any one of the preceding claims, wherein providing an electrode stack (2) comprises:
forming a bending line at each tab (4), wherein the bending line is optionally formed by reducing the thickness of the tab (4).

9. The method according to any one of the preceding claims, wherein heating the bent tab (4) of the at least one electrode (3) comprises at least one of: welding, brazing, soldering, and/or adhesive bonding.

10. The method according to any one of the preceding claims, wherein
the electrodes (3) comprise anodes, each comprising a tab (4), and cathodes, comprising each a tab (4), the anodes and cathodes being arranged alternately in the electrode stack (2), wherein
the method comprises bending the tabs (4) of the anodes and the tabs (4) of the cathodes, such that after bending the tabs (4) of the anodes and the tabs (4) of the cathodes are directed in opposite directions.

11. The method according to the preceding claim, wherein
the tabs (4) of the anodes are arranged adjacent to the tabs (4) of the cathodes on the same side of the electrode stack (2), or
the tabs (4) of the anodes and the tabs (4) of the cathodes are arranged on different sides of the electrode stack (2).

12. An energy storage device (1) produced by any one of the preceding claims.

13. A system for producing an energy storage device (1), the system comprising:
at least one side wall (8) configured to align an electrode stack (2), wherein the electrode stack (2) comprises at least two electrodes (3) having each a tab (4), wherein a separator (5) is arranged between the electrodes (3),
a stamp (9) configured to compress the electrode stack (2), and
at least a first roller (10) configured to bend the tabs (4).

14. The system of claim 13, wherein
the roller (10) is configured to be heated, and/or
the system further comprises a heat stamp (9) configured to heat the bent tabs (4).

15. The system of claim 13 or 14, the system further comprising:
a second roller (10) arranged adjacent to the first roller (10) on the same side of the electrode stack (2), or on another side of the electrode stack (2) than the first roller (10),
wherein the electrodes (3) comprise anodes comprising each a tab (4), and
cathodes comprising each a tab (4), the anodes and cathodes being arranged alternately in the electrode stack (2), wherein
the first roller (10) is configured to bend the tabs (4) of the anodes and the second roller (10) is configured to bend the tabs (4) of the cathodes, optionally such that after bending the tabs (4) of the anodes and the tabs (4) of the cathodes are directed in opposite directions.
